# EUROPÄISCHE PATENTSCHRIFT

(11) **EP 2 647 753 B1**
(45) Veröffentlichungstag und Bekanntmachung des Hinweises auf die Patenterteilung: **03.09.2014**
(21) Anmeldenummer: 13162061.9
(22) Anmeldetag: 03.04.2013
(51) Int. Cl.: D06F 39/08, D06F 39/12, F16L 3/237

(54) **Bogenrohrhalter zum Halten eines Schlauchs, Anordnung mit solchem Bogenrohrhalter sowie wasserführendes Haushaltsgerät mit solcher Anordnung**
Curved pipe holder for holding a hose, system with such a curved pipe holder and water-bearing household appliance with such an assembly
Support de tube coudé pour supporter un flexible, agencement doté d'un tel support de tube coudé et appareil ménager fonctionnant avec de l'eau doté d'un tel agencement

(30) Priorität: 05.04.2012 DE 102012205726
(43) Veröffentlichungstag der Anmeldung: 09.10.2013
(73) Patentinhaber: BSH Bosch und Siemens Hausgeräte GmbH, 81739 München (DE)
(72) Erfinder: Ayhaner, Alper, 10707 Berlin (DE); Bolduan, Edwin, 13629 Berlin (DE); Patel, Necdet, 12099 Berlin (DE)

(56) Entgegenhaltungen:
- EP-A2- 1 884 702
- DE-A1-102006 030 014
- DE-U- 1 851 066
- US-A- 3 860 978
- US-A- 4 922 554
- US-B1- 6 311 936

## Beschreibung

Die Erfindung betrifft einen Bogenrohrhalter, der zum Halten eines Schlauchs eines wasserführenden Haushaltsgeräts dient, eine Anordnung mit solch einem Bogenrohrhalter für ein wasserführendes Haushaltsgerät und ein wasserführendes Haushaltsgerät, das insbesondere als Wäschebehandlungsgerät zum Waschen von Wäsche ausgestaltet ist, mit einer Anordnung aus einem Schlauch und einem Bogenrohrhalter. Speziell betrifft die Erfindung das Gebiet der Waschmaschinen und Waschtrockner.

Aus der EP 1 209 275 A2 ist eine Waschmaschine mit einem Laugenabpumpstrang bekannt. Die bekannte Waschmaschine weist einen Laugenbehälter auf, in dem eine Wäschetrommel um eine Horizontalachse drehbar gelagert ist. Dem Laugenbehälter kann über eine Leitung, ein Magnetventil und eine Waschmitteleinspüleinrichtung Wasser zugeführt werden. An den Boden des Laugenbehälters ist eine Ablaufleitung angeschlossen, die über einen Flusenabscheider zu der Saugseite einer Laugenpumpe führt. An die Druckseite der Laugenpumpe ist ein Ablaufschlauch angeschlossen, der aus einem unteren Abpumpleitungsstück und einem oberen Abpumpleitungsstück besteht. Das obere Abpumpleitungsstück kann an einen Abfluss angeschlossen oder in ein Wasserabflussbecken gehängt werden. Die beiden Abpumpleitungsstücke sind biegbar und vorzugsweise als so genannte Wellrohrschläuche ausgestaltet.

Die aus der EP 1 209 275 A2 bekannte Waschmaschine hat den Nachteil, dass das biegbare obere Abpumpleitungsstück sich bei einem Abpumpen aufbiegen kann. Dies tritt speziell bei großen Abpumpdrücken auf. Der Anwendungsbereich ist daher begrenzt.

Denkbar ist es, dass für das obere Abpumpleitungsstück eine zusätzliche Führung in Form eines Bogens vorgesehen ist. An diese Führung kann das obere Abpumpleitungsstück über Schellen oder dergleichen befestigt werden. Diese Ausgestaltung ist jedoch aufwändig und mit entsprechend großen Herstellungskosten verbunden.

Aus US 6,311,936 B1 ist ein Schlauchhalter in Form eines flachen Plastikteils bekannt, das einstückiig ausgebildet ist, und das zwei ringförmige Öffnungen zur Aufnahme des Schlauchs aufweist. Die beiden Öffnungen sind C-förmig, mit ihrer offenen Seite zueinander gerichtet ausgebildet und über einen Steg verbunden. Von diesem Steg erstreckt sich ein Aufhänger, mit dem der Schlauchhalter an einer entsprechenden Aufnahmeöffung an der Rückseite einer Waschmaschine eingehängt werden kann.

Aus DE 1 851 066 U ist ein Verbindungssteg für das Zusammenhalten von Leitungen und Kabeln bekannt, wobei der Verbindungssteg auf die Leitungen und Kabel aufschiebbar bzw. seitlich aufsteckbar ausgebildet und durch Verklemmen festgehalten ist.

Aus EP 1 884 702 A2 ist eine Schelle zur Fixierung strangförmiger Bauteile, wie z.B. Schläuchen oder Kabeln, mit aneinander festlegbaren Schellenkörpern bekannt, die zwischen sich Aufnahmekanäle für die zu fixierenden Bauteile bilden. Die Schellenkörper weisen eine Rasteinrichtung zur gegenseitigen Verrastung in aneinander festgelegtem Zustand auf, wobei einer der Schellenkörper einen bewegbaren Rastkörper aufweist, der mit einer Rastfläche des anderen Schellkörpers verhakbar ist. Mit einem separaten Verriegelungsteil wird der verhakte Rastkörper gegen Aushaken gesichert.

Aus DE 10 2006 030 014 A1 ist eine Waschmaschine mit einem Halter für einen Ablaufschlauch bekannt. Der Halter weist eine geöffnete Seite auf, um den Ablaufschlauch in die geöffnete Seite einzupassen. Desweiteren weist der Halter eine Abdeckung auf, die sich von einem Ende der geöffneten Seite des Halters erstreckt und um dieses Ende herum gebogen ist, um die geöffnete Seite des Halters zu schließen. An einer Seite des Halters ist ein Befestigungsabschnitt vorgesehen, mit dem der Halter am Gehäuse der Waschmaschine fixiert ist.

Aus US 4,922,554 A ist ein Halter für einen flexiblen Ablaufschlauch bekannt, der Öffnungen zur Halterung des Schlauches in horizontaler und vertikaler Richtung aufweist.

Aus US 3,860,978 A ist eine einfach zu installierender Siphon in einem Sanitär-System bekannt, die zwischen einem Ablauf einer Sanitärarmatur und einer Abwasserleitung eingebaut werden kann. Die Vorrichtung besteht aus einem flexiblen Schlauch, der ohne Verformung in Kurven gebogen werden kann, Armaturen zur Fixierung der Enden des

Schlauches an dem Ablauf bzw. der Abwasserleitung, und einer abnehmbaren Klammer, durch die der Schlauch in einer U-Form gehalten wird, um auf diese Weise den Siphon zu bilden.

Aufgabe der Erfindung ist es, einen Bogenrohrhalter, der zum Halten eines Schlauchs eines wasserführenden Haushaltsgeräts dient, eine Anordnung mit einem Bogenrohrhalter sowie ein wasserführendes Haushaltsgerät mit solch einer Anordnung anzugeben, die einen verbesserten Aufbau aufweisen. Speziell ist es eine Aufgabe der Erfindung, die Funktion zum Halten eines Schlauchs eines wasserführenden Haushaltsgeräts auf zuverlässige Weise mit einem möglichst geringen Herstellungsaufwand zu realisieren.

Die Aufgabe wird durch einen Bogenrohrhalter, der zum Halten eines Schlauchs eines wasserführenden Haushaltsgeräts dient, gelöst, wobei ein flacher Grundkörper und eine Schließlasche, die relativ zu dem Grundkörper um eine Schwenkachse schwenkbar ist, vorgesehen sind, wobei der flache Grundkörper eine Ausnehmung aufweist, wobei durch einen ersten äußeren Teil der Ausnehmung ein erster Abschnitt des Schlauchs führbar ist, wobei durch einen zweiten äußeren Teil der Ausnehmung ein zweiter Abschnitt des Schlauchs führbar ist und wobei ein mittlerer Teil der Ausnehmung, der zwischen dem ersten äußeren Teil der Ausnehmung und dem zweiten äußeren Teil der Ausnehmung angeordnet ist, in einer Geschlossen-Schwenkstellung der Schließlasche von der Schließlasche zumindest teilweise überdeckt ist. Ferner wird die Aufgabe durch eine Anordnung mit solch einem Bogenrohrhalter und einem Schlauch gelöst, wobei ein erster Abschnitt des Schlauchs durch den ersten äußeren Teil der Ausnehmung geführt ist, wobei ein zweiter Abschnitt des Schlauchs durch den zweiten äußeren Teil der Ausnehmung geführt ist und wobei zwischen dem ersten Abschnitt des Schlauchs und dem zweiten Abschnitt des Schlauchs ein Bogenabschnitt des Schlauchs ausgebildet ist. Außerdem wird die Aufgabe durch ein wasserführendes Haushaltsgerät, das insbesondere als Wäschebehandlungsgerät zum Waschen von Wäsche ausgestaltet sein kann, mit solch einer Anordnung gelöst.

Durch die in den Unteransprüchen aufgeführten Maßnahmen sind vorteilhafte Weiterbildungen des erfindungsgemäßen Bogenrohrhalters, der erfindungsgemäßen Anordnung und des erfindungsgemäßen wasserführenden Haushaltsgeräts möglich. Der Schlauch des wasserführenden Haushaltsgeräts ist kein Bestandteil des Bogenrohrhalters. Der Bogenrohrhalter kann auch getrennt von einem diesbezüglichen Schlauch oder einem wasserführenden Haushaltsgerät hergestellt und vertrieben werden. Möglich ist allerdings auch ein Vertrieb der Anordnung als Set aus einem Bogenrohrhalter und einem Schlauch, die beispielsweise bei der Montage des wasserführenden Haushaltsgeräts, im Rahmen einer Installation beim Kunden oder auch zum Nachrüsten vom Kunden selbst zusammengefügt werden.

Vorteilhaft ist es, dass die Schwenkachse, um die die Schließlasche schwenkbar ist, bezüglich einer Außenkante des Grundkörpers definiert ist. Somit kann die Schließlasche um die bezüglich der Außenkante des Grundkörpers bestimmte Schwenkachse geschwenkt werden. In einer Geöffnet-Schwenkstellung der Schließlasche kann beispielsweise ein Bogenabschnitt des Schlauchs durch die Ausnehmung des flachen Grundkörpers geführt werden. Durch die geöffnete Schließlasche kann hierbei gegebenenfalls ein größeres Spiel oder eine einfachere Handhabung zum Durchführen des Schlauches gegeben sein. Wenn sich der Schlauch dann in der gewünschten Position befindet, dann kann die Schließlasche in die Geschlossen-Schwenkstellung geschwenkt werden. Hierfür ist es ferner vorteilhaft, dass die Schließlasche über einen elastischen Verbindungsabschnitt mit dem Grundkörper verbunden ist. Vorteilhaft ist es hierbei auch, dass der Grundkörper und die Schließlasche als einstückiges Formteil ausgeformt sind. Hierdurch ist eine kostengünstige Herstellung des Bogenrohrhalters möglich. Speziell ist das Formteil durch ein Spritzgussverfahren herstellbar.

Vorteilhaft ist es auch, dass der flache Grundkörper zumindest eine Fixierrippe aufweist, die an dem ersten äußeren Teil der Ausnehmung vorgesehen ist. Hierbei können an dem ersten äußeren Teil der Ausnehmung auch mehrere Fixierrippen, insbesondere zwei Fixierrippen, vorgesehen sein. Entsprechend ist es vorteilhaft, dass der flache Grundkörper zumindest eine Fixierrippe aufweist, die an dem zweiten äußeren Teil der Ausnehmung vorgesehen ist. Hierbei können an dem zweiten äußeren Teil der Ausnehmung auch mehrere Fixierrippen, insbesondere zwei Fixierrippen, vorgesehen sein. Die Fixierrippen können bei einem entsprechend ausgeformten Schlauch, insbesondere einem wellförmig ausgestalteten Schlauch, formschlüssig mit dem Schlauch zusammenwirken, um diesen zu fixieren. Hierdurch kann insbesondere ein Verrutschen des Schlauches in Strömungsrichtung eines durch den Schlauch fließenden Flüssigkeitsstroms verhindert werden.

Vorteilhaft ist es auch, dass eine Höhe der Fixierrippe an dem ersten äußeren Teil der Ausnehmung beziehungsweise eine Höhe der Fixierrippe an dem zweiten äußeren Teil der Ausnehmung kleiner ist als eine Höhe des flachen Grundkörpers. Hierdurch kann der flache Grundkörper besonders stabil ausgestaltet werden, während zugleich die Fixierrippen auch in vergleichsweise kleine Strukturen des Schlauches eingreifen können, insbesondere in Wellenstrukturen, um einen Formschluss herzustellen.

In vorteilhafter Weise sind an dem Grundkörper und der Schließlasche zumindest ein Fixierzapfen und eine Durchgangsbohrung ausgestaltet, die einander zugeordnet sind, wobei in der Geschlossen-Schwenkstellung der Schließlasche der Fixierzapfen zumindest teilweise durch die Durchgangsbohrung ragt. Hierbei ist es ferner vorteilhaft, dass der Fixierzapfen einen Fixierkopf aufweist und dass der Fixierkopf in der Geschlossen-Schwenkstellung der Schließlasche durch die Durchgangsbohrung hindurchgreift. Beispielsweise kann der Fixierzapfen an dem Grundkörper ausgestaltet sein und die Durchgangsbohrung kann an der Schließlasche ausgestaltet sein. Allerdings kann der Fixierzapfen auch an der Schließlasche ausgestaltet sein, während die Durchgangsbohrung an dem Grundkörper ausgestaltet ist. Die Ausgestaltung des Fixierzapfens an dem Grundkörper hat den Vorteil, dass die Höhe des Grundkörpers vergleichsweise groß sein kann, während die Höhe der Schließlasche vergleichsweise klein ist, so dass der Fixierzapfen besonders einfach durch die Durchgangsbohrung der Schließlasche geführt werden kann, wenn ein Schwenken in die Geschlossen-Schwenkstellung erfolgt. Es können auch mehrere Fixierzapfen und mehrere zugeordnete Durchgangsbohrungen vorgesehen sein.

Vorteilhaft ist es auch, dass an der Schließlasche zumindest eine Befestigungsausnehmung ausgestaltet ist, die zum ortsfesten Befestigen dient. Beispielsweise kann die Befestigungsausnehmung durch eine Bohrung mit einem angrenzenden Schlitz ausgestaltet sein. Hierdurch kann ein Schraubenkopf durch die Bohrung geführt werden und anschließend die Schließlasche im Bereich des Schlitzes hintergreifen. Hierdurch ist eine einfach zu montierende und zugleich zuverlässige ortsfeste Befestigung des Bogenrohrhalters möglich. Die Befestigung kann beispielsweise an einem wasserführenden Haushaltsgerät erfolgen.

Somit kann ein vorteilhafter Bogenrohrhalter realisiert werden, der kostengünstig hergestellt werden kann. Hierbei kann mit vergleichsweise kleinen Abmessungen eine hohe Funktionalität erzielt werden. Speziell können durch die flache und damit kompakte Ausgestaltung des Bogenrohrhalters eine Lagerung, ein Transport und eine Handhabung während der Montage wesentlich vereinfacht werden. Auch der Materialeinsatz ist optimiert. Hierdurch werden auch Verpackungs- und Versandkosten verringert. Hierbei kann auch ein einzelnes Nachrüst- oder Austauschteil kostengünstig transportiert werden, insbesondere zu einem Endverbraucher. Außerdem kann durch die vorteilhafte Ausgestaltung eine Montage auch durch den Endverbraucher vorgenommen werden.

Durch die kompakte Ausgestaltung ist auch der beispielsweise an einem wasserführenden Haushaltsgerät benötigte Bauraum optimiert.

Bevorzugte Ausführungsbeispiele der Erfindung sind in der nachfolgenden Beschreibung anhand der Figuren der beigefügten Zeichnung, in denen sich entsprechende Elemente mit übereinstimmenden Bezugszeichen versehen sind, näher erläutert. Es zeigen:
- Fig. 1: einen Bogenrohrhalter in einer schematischen, räumlichen Darstellung entsprechend einem Ausführungsbeispiel;
- Fig. 2: den in Fig. 1 dargestellten Bogenrohrhalter des Ausführungsbeispiels in einer schematischen Darstellung aus der mit II bezeichneten Blickrichtung und
- Fig. 3: ein wasserführendes Haushaltsgerät mit einer Anordnung, die den in Fig. 1 dargestellten Bogenrohrhalter aufweist, in einer auszugsweisen, schematischen Darstellung entsprechend dem Ausführungsbeispiel.

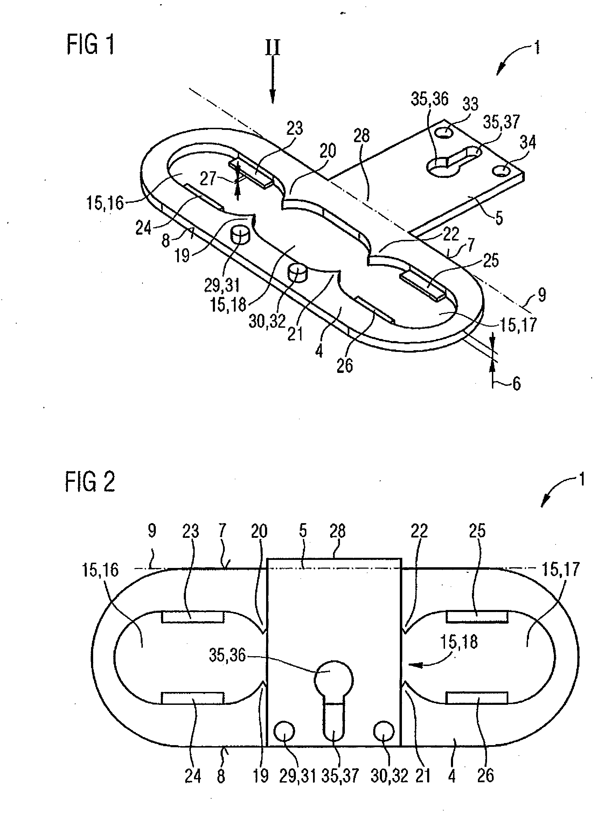

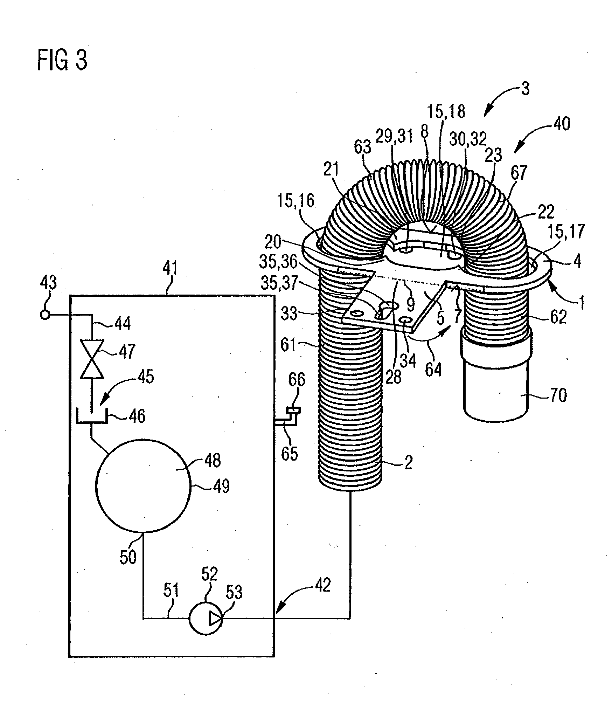

Fig. 1 zeigt einen Bogenrohrhalter 1 in einer schematischen, räumlichen Darstellung entsprechend einem Ausführungsbeispiel. Der Bogenrohrhalter 1 dient zum Halten eines Schlauchs 2 eines wasserführenden Haushaltsgeräts 3, wie es anhand der Fig. 3 veranschaulicht und näher beschrieben ist. Der Bogenrohrhalter 1 kann hierbei auch getrennt von einem Schlauch 2 und einem Haushaltsgerät 3 hergestellt und vertrieben werden. Speziell ist eine Anpassung des Bogenrohrhalters 1 an geeignet ausgestaltete Schläuche 2 beziehungsweise an geeignete Haushaltsgeräte 3 möglich. Dadurch ergibt sich ein großer Anwendungsbereich.

Der Bogenrohrhalter 1 weist einen flachen Grundkörper 4 und eine Schließlasche 5 auf. Der Grundkörper 4 ist flach in Bezug auf eine Höhe 6 des Grundkörpers 4. Das heißt, die Höhe 6 ist klein vorgegeben, beispielsweise im Bereich weniger Millimeter. Der flache Grundkörper 4 weist voneinander abgewandte Außenkanten 7, 8 auf. Die Außenkanten 7, 8 sind hierbei parallel zueinander orientiert. Bezüglich der Außenkante 7 ist eine Schwenkachse 9 definiert. Die Schließlasche 5 ist um die Schwenkachse 9 relativ zu dem flachen Grundkörper 4 schwenkbar.

Der flache Grundkörper 4 weist eine Ausnehmung 15 auf, die in einen ersten äußeren Teil 16, einen zweiten äußeren Teil 17 und einen mittleren Teil 18 aufgeteilt ist. Der mittlere Teil 18 ist zwischen dem ersten äußeren Teil 16 und dem zweiten äußeren Teil 17 angeordnet. In diesem Ausführungsbeispiel sind sich in die Ausnehmung 15 erstreckende Nasen 19, 20, 21, 22 an dem flachen Grundkörper 4 ausgestaltet. Durch die Nasen 19, 20 beziehungsweise die Nasen 21, 22 ergibt sich die Aufteilung der Ausnehmung 15 in die Teile 16 bis 18.

Der flache Grundkörper 4 weist Fixierrippen 23, 24, 25, 26 auf. Die Fixierrippen 23, 24 sind an dem ersten äußeren Teil 16 der Ausnehmung 15 vorgesehen. Die Fixierrippen 25, 26 sind an dem zweiten äußeren Teil 17 der Ausnehmung 15 vorgesehen. Eine Höhe 27 der Fixierrippen 23 bis 26 an dem ersten äußeren Teil 16 der Ausnehmung 15 beziehungsweise dem zweiten äußeren Teil 17 der Ausnehmung 15 ist kleiner vorgegeben als die Höhe 6 des flachen Grundkörpers 4. In diesem Ausführungsbeispiel weisen alle Fixierrippen 23 bis 26 die gleiche Höhe 27 auf.

Die Schließlasche 5 ist über einen elastischen Verbindungsabschnitt 28 mit dem Grundkörper 4 verbunden. Hierbei können der Grundkörper 4 und die Schließlasche 5 zusammen mit dem elastischen Verbindungsabschnitt 28 als einstückiges Formteil ausgeformt sein. Hierdurch wird eine kostengünstige Herstellung ermöglicht.

An dem flachen Grundkörper 4 sind Fixierzapfen 29, 30 ausgestaltet. Die Fixierzapfen 29, 30 weisen in diesem Ausführungsbeispiel Fixierköpfe 31, 32 auf. Den Fixierzapfen 29, 30 mit den Fixierköpfen 31, 32 sind an der Schließlasche 5 ausgestaltete Durchgangsbohrungen 33, 34 zugeordnet. Beim Schwenken der Schließlasche 5 in die Geschlossen-Schwenkstellung, die in der Fig. 2 dargestellt ist, greifen die Fixierköpfe 31, 32 der Fixierzapfen 29, 30 durch die Durchgangsbohrungen 33, 34 der Schließlasche 5 hindurch. Hierdurch ist eine Fixierung der Schließlasche 5 in der Geschlossen-Schwenkstellung erzielt.

An der Schließlasche 5 ist außerdem eine Befestigungsausnehmung 35 ausgestaltet, die zum ortsfesten Befestigen des Bogenrohrhalters an dem Haushaltsgerät 3 oder an einer anderen Anbaustruktur dient. In diesem Ausführungsbeispiel weist die Befestigungsausnehmung 35 eine Bohrung 36 mit einem angrenzenden Schlitz 37 auf. Durch die Bohrung 36 kann beispielsweise ein Schraubenkopf gefügt werden, der dann hinter den Schlitz 37 geführt wird, um die Befestigung zu gewährleisten.

Fig. 2 zeigt den in Fig. 1 dargestellten Bogenrohrhalter 1 des Ausführungsbeispiels aus der mit II bezeichneten Blickrichtung in einer schematischen Darstellung. Hierbei ist der Bogenrohrhalter 1 in der Fig. 1 in einer Geöffnet-Schwenkstellung gezeigt, während der Bogenrohrhalter 1 in der Fig. 2 in einer Geschlossen-Schwenkstellung gezeigt ist. Die Geöffnet-Schwenkstellung kann hierbei der Formgebung bei einer Herstellung, insbesondere einem Spritzgießen, des Bogenrohrhalters 1 als Formteil entsprechen. Aus dieser Stellung wird die Schließlasche 5 um die Schwenkachse 9 um 180° geschwenkt, um in die Geschlossen-Schwenkstellung zu gelangen.

In der in der Fig. 2 dargestellten Geschlossen-Schwenkstellung überdeckt die Schließlasche 5 den mittleren Teil 18 der Ausnehmung 15 teilweise. In diesem Ausführungsbeispiel ist die Befestigungsausnehmung 35 im Bereich des mittleren Teils 18 der Ausnehmung 15 vorgesehen, so dass beim Befestigen des Bogenrohrhalters 1 zugleich die Schließlasche 5 in ihrer Geschlossen-Schwenkstellung fixiert ist. Außerdem erfolgt eine Fixierung der Schließlasche 5 relativ zu dem flachen Grundkörper 4 über die Fixierköpfe 31, 32 an den Fixierzapfen 29, 30.

Fig. 3 zeigt das Haushaltsgerät 3 mit einer Anordnung 40, die den anhand der Figuren 1 und 2 beschriebenen Bogenrohrhalter 1 aufweist, in einer auszugsweisen, schematischen Darstellung entsprechend dem Ausführungsbeispiel. Die Anordnung 40 umfasst den Bogenrohrhalter 1 und den Schlauch 2. Die Anordnung 40 ist hierbei Bestandteil des wasserführenden Haushaltsgeräts 3. Das Haushaltsgerät 3 weist ein Gehäuse 41 auf. Die Anordnung 40 mit dem Bogenrohrhalter 1 befindet sich zumindest teilweise außerhalb des Gehäuses 41. Hierbei kann der Schlauch 2 auch teilweise in das Gehäuse 41 geführt sein. Auch ein Anschluss des Schlauches 2 an einer geeigneten Anschlussstelle 42 des Gehäuses 41 ist möglich.

Das Haushaltsgerät 3 kann insbesondere als Wäschebehandlungsgerät 3 ausgestaltet sein und zum Waschen von Wäsche dienen. Speziell kann das Haushaltsgerät 3 als Waschmaschine oder Waschtrockner ausgestaltet sein. Der Bogenrohrhalter 1 sowie die Anordnung 40 eignen sich besonders für solche Haushaltsgeräte 3. Allerdings eignen sich der Bogenrohrhalter 1 der Erfindung und die Anordnung 40 in entsprechend angepasster Abwandlung auch für andere Anwendungsfälle. Dementsprechend kann das Haushaltsgerät 3 beispielsweise auch als Geschirrspülmaschine oder dergleichen ausgestaltet sein.

Das Haushaltsgerät 3 weist einen Frischwasseranschluss 43 auf, der beispielsweise mit einer Hausinstallation verbindbar ist. Von dem Frischwasseranschluss 43 führt eine Frischwasserleitung 44 über eine freie Luftstrecke 45 in eine Einspülschale 46. In der Frischwasserleitung 44 ist ein Sperrventil 47 angeordnet, das von einer nicht dargestellten Steuerung entsprechend einem Programmablauf geschaltet wird. Bei geöffnetem Sperrventil 47 kann somit Frischwasser durch die Einspülschale 46 geführt werden. Dadurch kann Frischwasser oder ein Gemisch aus Frischwasser und einem Behandlungsmittel, insbesondere Wäschebehandlungsmittel, aus der Einspülschale 46 in einen Behandlungsbereich 48 geführt werden. In diesem Ausführungsbeispiel ist der Behandlungsbereich 48 von einem Behälter 49 umgeben, der als Laugenbehälter 49 ausgestaltet ist. An einem Ausgang 50 des Laugenbehälters 49 ist ein Abwasserstrang 51 angeschlossen, in dem unter anderem eine Laugenpumpe 52 angeordnet ist. An einer Druckseite 53 oder einer Anschlussstelle 42 des Gehäuses 41 ist der Schlauch 2 befestigt.

Der Schlauch 2 weist einen ersten Abschnitt 61 und einen zweiten Abschnitt 62 auf. Ferner weist der Schlauch 2 einen Bogenabschnitt 63 auf.

Bei der Montage der Anordnung 40 wird der Schlauch 2 so durch den Bogenrohrhalter 1 geführt, dass der erste Abschnitt 61 durch den ersten äußeren Teil 16 der Ausnehmung 15 geführt ist, dass der zweite Abschnitt 62 durch den zweiten äußeren Teil 17 der Ausnehmung 15 geführt ist und dass zwischen dem ersten Abschnitt 61 und dem zweiten Abschnitt 62 der Bogenabschnitt 63 des Schlauchs 2 ausgebildet ist. Vorzugsweise macht der Schlauch 2 am Bogenabschnitt 63 eine Biegung um 180°. Der erste Abschnitt 61 und der zweite Abschnitt 62 sind dann zumindest näherungsweise parallel zueinander orientiert.

In der Fig. 3 ist der Bogenrohrhalter 1 noch nicht in der Geöffnet-Schwenkstellung dargestellt. Bei der weiteren Montage wird die Schließlasche 5 um die Schwenkachse 9 in die Geschlossen-Schwenkstellung geschwenkt, wie es durch den Pfeil 64 veranschaulicht ist. Anschließend wird die Anordnung 40 geeignet zu dem Gehäuse 41 positioniert, um den Bogenrohrhalter 1 an einem Befestigungsmittel 65 zu fixieren. Ein Kopf 66 des Befestigungsmittels 65 wird hierzu durch die Bohrung 36 der Befestigungsausnehmung 35 der Schließlasche 5 geführt und hintergreift anschließend im Bereich des Schlitzes 37 die Schließlasche 5. In diesem Ausführungsbeispiel ist das Befestigungsmittel 65 mit dem Gehäuse 41 des Haushaltsgeräts 3 verbunden. Dadurch ist der Bogenrohrhalter 1 dann ortsfest an dem Gehäuse 41 befestigt. Somit ist dann auch die Anordnung 40 ortsfest an dem Gehäuse 41 des Haushaltsgeräts 3 befestigt.

Der Schlauch 3 weist eine wellenförmige Ausgestaltung auf, so dass an seiner Außenseite eine Vielzahl von ringförmigen Vertiefungen 67 vorgesehen sind. Im montierten Zustand greifen die Fixierrippen 23 bis 26 des flachen Grundkörpers 4 an geeigneten Stellen des Schlauches 2 in die dort vorgesehenen ringförmigen Vertiefungen ein. Somit ist eine formschlüssige Verbindung zwischen dem Schlauch 2 und dem Bogenrohrhalter 1 gebildet.

In der Geschlossen-Schwenkstellung kann außerdem eine weitere Fixierung des Schlauches 2 erzielt werden. Insbesondere ist in der Geschlossen-Schwenkstellung der Schließlasche 5 eine selbsttätige Entfernung des Schlauches 2 aus seiner Fixierposition zuverlässig verhindert.

Der Schlauch 2 weist in diesem Ausführungsbeispiel ein Anschlussstück 70 auf, das beispielsweise mit einer Abwasserleitung einer Hausinstallation verbindbar ist. Beim Abpumpen der Lauge aus dem Laugenbehälter 49 auftretende Strömungskräfte werden hierbei zuverlässig von der Befestigung des Bogenrohrhalters 1 an dem Gehäuse 41 aufgenommen. Die Verbindung an dem Anschlussstück 70 wird hierdurch erheblich entlastet.

Die Erfindung ist nicht auf die beschriebenen Ausführungsbeispiele beschränkt.

### Bezugszeichenliste

- 1: Bogenrohrhalter
- 2: Schlauch
- 3: wasserführendes Haushaltsgerät
- 4: flacher Grundkörper
- 5: Schließlasche
- 6: Höhe
- 7, 8: Außenkante
- 9: Schwenkachse
- 15: Ausnehmung
- 16: erster äußerer Teil
- 17: zweiter äußerer Teil
- 18: mittlerer Teil
- 19 - 22: Nase
- 23 - 26: Fixierrippe
- 27: Höhe
- 28: elastischer Verbindungsabschnitt
- 29, 30: Fixierzapfen
- 31, 32: Fixierkopf
- 33, 34: Durchgangsbohrung
- 35: Befestigungsausnehmung
- 36: Bohrung
- 37: Schlitz
- 40: Anordnung
- 41: Gehäuse
- 42: Anschlussstelle
- 43: Frischwasseranschluss
- 44: Frischwasserleitung
- 45: freie Luftstrecke
- 46: Einspülschale
- 47: Sperrventil
- 48: Behandlungsbereich
- 49: Laugenbehälter
- 50: Ausgang
- 51: Abwasserstrang
- 52: Laugenpumpe
- 53: Druckseite
- 61: erster Abschnitt
- 62: zweiter Abschnitt
- 63: Bogenabschnitt
- 64: Pfeil
- 65: Befestigungsmittel
- 66: Kopf
- 67: ringförmige Vertiefung
- 70: Anschlussstück

## Patentansprüche

1. Bogenrohrhalter (1), der zum Halten eines Schlauchs (2) eines wasserführenden Haushaltsgeräts (3) dient, mit einem flachen Grundkörper (4), wobei der Grundkörper (4) eine Ausnehmung (15) aufweist, wobei durch einen ersten äußeren Teil (16) der Ausnehmung (15) ein erster Abschnitt (61) des Schlauchs (2) führbar ist, wobei durch einen zweiten äußeren Teil (17) der Ausnehmung (15) ein zweiter Abschnitt (62) des Schlauchs (2) führbar ist und wobei ein mittlerer Teil (18) der Ausnehmung (15) zwischen dem ersten äußeren Teil (16) der Ausnehmung (15) und dem zweiten äußeren Teil (17) der Ausnehmung (15) angeordnet ist, **dadurch gekennzeichnet, dass** der Bogenrohrhalter (1) eine Schließlasche (5) aufweist, die relativ zu dem Grundkörper (4) um eine Schwenkachse (9) schwenkbar ist, und dass der mittlerer Teil (18) der Ausnehmung (15) in einer Geschlossen-Schwenkstellung der Schließlasche (5) von der Schließlasche (5) zumindest teilweise überdeckt ist.

2. Bogenrohrhalter (1) nach Anspruch 1, **dadurch gekennzeichnet, dass** die Schwenkachse (9), um die die Schließlasche (5) schwenkbar ist, bezüglich einer Außenkante (7) des Grundkörpers (4) definiert ist.

3. Bogenrohrhalter (1) nach einem der Ansprüche 1 und 2, **dadurch gekennzeichnet, dass** die Schließlasche (5) über einen elastischen Verbindungsabschnitt (28) mit dem Grundkörper (4) verbunden ist.

4. Bogenrohrhalter (1) nach einem der Ansprüche 1 bis 3, **dadurch gekennzeichnet, dass** der Grundkörper (4) und die Schließlasche (5) an einem einstückigen Formteil ausgeformt sind.

5. Bogenrohrhalter (1) nach einem der Ansprüche 1 bis 4, **dadurch gekennzeichnet, dass** der flache Grundkörper (4) zumindest eine Fixierrippe (23, 24) aufweist, die an dem ersten äußeren Teil (16) der Ausnehmung (15) vorgesehen ist, und/oder dass der flache Grundkörper (4) zumindest eine Fixierrippe (25, 26) aufweist, die an dem zweiten äußeren Teil (17) der Ausnehmung (15) vorgesehen ist.

6. Bogenrohrhalter (1) nach Anspruch 5, **dadurch gekennzeichnet, dass** eine Höhe (27) der Fixierrippe (23, 24) an dem ersten äußeren Teil (16) der Ausnehmung (15) beziehungsweise eine Höhe (27) der Fixierrippe (25, 26) an dem zweiten äußeren Teil (17) der Ausnehmung (15) kleiner ist als eine Höhe (6) des flachen Grundkörpers (4).

7. Bogenrohrhalter (1) nach einem der Ansprüche 1 bis 6, **dadurch gekennzeichnet, dass** an dem Grundkörper (4) und der Schließlasche (5) zumindest ein Fixierzapfen (29, 30) und eine Durchgangsbohrung (33, 34) ausgestaltet sind, die einander zugeordnet sind, und dass in der Geschlossen-Schwenkstellung der Schließlasche (5) der Fixierzapfen (29, 30) zumindest teilweise durch die Durchgangsböhrung (33, 34) ragt.

8. Bogenrohrhalter (1) nach Anspruch 7, **dadurch gekennzeichnet, dass** der Fixierzapfen (29, 30) einen Fixierkopf (31, 32) aufweist und dass der Fixierkopf (31, 32) in der Geschlossen-Schwenkstellung der Schließlasche (5) durch die Durchgangsbohrung (33, 34) hindurchgreift.

9. Bogenrohrhalter (1) nach einem der Ansprüche 1 bis 8, **dadurch gekennzeichnet, dass** an der Schließlasche (5) zumindest eine Befestigungsausnehmung (35) ausgestaltet ist, die zum ortsfesten Befestigen dient.

10. Anordnung (40) mit einem Bogenrohrhalter (1) nach einem der Ansprüche 1 bis 9 und einem Schlauch (2), wobei ein erster Abschnitt (61) des Schlauchs (2) durch den ersten äußeren Teil (16) der Ausnehmung (15) geführt ist, wobei ein zweiter Abschnitt (62) des Schlauchs (2) durch den zweiten äußeren Teil (17) der Ausnehmung (15) geführt ist und wobei zwischen dem ersten Abschnitt (61) des Schlauchs (2) und dem zweiten Abschnitt (62) des Schlauchs (2) ein Bogenabschnitt (63) des Schlauchs (2) ausgebildet ist.

11. Anordnung (40) nach Anspruch 10, **dadurch gekennzeichnet, dass** der erste Abschnitt (61) und der zweite Abschnitt (62) zumindest näherungsweise parallel zueinander orientiert sind.

12. Wasserführendes Haushaltsgerät (3), insbesondere Wäschebehandlungsgerät (3) zum Waschen von Wäsche, mit einer Anordnung (40) nach einem der Ansprüche 10 und 11.

## Claims

1. Curved tube holder (1), which serves for holding a hose (2) of a water-conducting domestic appliance (3), with a flat base body (4), wherein the base body (4) has a recess (15), wherein a first section (61) of the hose (2) can be led through a first outer part (16) of the recess (15), wherein a second section (62) of the hose (2) can be led through a second outer part (17) of the recess (15) and wherein a middle part (18) of the recess is arranged between the first, outer part (16) of the recess (15) and the second outer part (17) of the recess (15), **characterised in that** the curved tube holder (1) has a closing strap (5) which is pivotable relative to the base body (4) about a pivot axis (9) and that the middle part (18) of the recess (15) in a closed pivot setting of the closing strap (5) is at least partly covered by the closing strap (5).

2. Curved tube holder (1) according to claim 1, **characterised in that** the pivot axis (9) about which the closing strap (5) is pivotable is defined with respect to an outer edge (7) of the base body (4).

3. Curved tube holder (1) according to one of claims 1 and 2, **characterised in that** the closing strap (5) is connected with the base body (4) by way of a resilient connecting section (28).

4. Curved tube holder (1) according to any one of claims 1 to 3, **characterised in that** the base body (4) and the closing strap (5) are formed at an integral moulded part.

5. Curved tube holder (1) according to any one of claims 1 to 4, **characterised in that** the flat base body (4) has at least one fixing rib (23, 24) which is provided at the first outer part (16) of the recess (15) and/or the flat base body (4) has at least one fixing fib (25, 26) which is provided at the second outer part (17) of the recess (15).

6. Curved tube holder (1) according to claim 5, **characterised in that** the height (27) of the fixing rib (23, 24) at the first outer part (16) of the recess (15) or the height (27) of the fixing rib (25, 26) at the second outer part (17) of the recess 915) is less than the height (6) of the flat base body (4).

7. Curved tube holder (1) according to any one of claims 1 to 6, **characterised in that** at least one fixing pin (29, 30) and passage bore (33, 34), which are associated with one another, are formed at the base body (4) and the closing strap (5) and that in the closed pivot setting of the closing strap (5) the fixing pin (29, 30) protrudes at least partly through the passage bore (33, 34).

8. Curved tube holder (1) according to claim 7, **characterised in that** the fixing pin (29, 30) has a fixing head (31, 32) and that the fixing head (31, 32) in the closed pivot setting of the closing strap (5) engages through the passage bore (33, 34).

9. Curved tube holder (1) according to any one of claims 1 to 8, **characterised in that** at least one fastening recess (35), which serves for stationary fastening, is formed at the closing strap (5).

10. Arrangement (40) with a curved tube holder (10 according to any one of claims 1 to 9 and a hose (2), wherein a first section (61) of the hose (2) is led through the first outer part (16) of the recess (15), wherein a second section (62) of the hose (2) is led through the second outer part (17) of the recess (15) and wherein a curved hose section (63) of the hose (2) is formed between the first section (61) of the hose (2) and the second section (62) of the hose (2).

11. Arrangement (40) according to claim 10, **characterised in that** the first section (61) and the second section (62) are oriented at least approximately parallel to one lanother.

12. Water-conducting domestic appliance (3), particularly laundry treatment appliance (3) for washing laundry, with an arrangement (40) according to one of claims 10 and 11.

## Revendications

1. Support de tube coudé (1) qui sert à tenir un tuyau (2) d'un appareil ménager (3) à circulation d'eau, comprenant un corps de base plat (4), le corps de base (4) présentant un évidement (15), une première section (61) du tuyau (2) pouvant être guidée à travers une première partie extérieure (16) de l'évidement (15), une deuxième section (62) du tuyau (2) pouvant être guidée à travers une deuxième partie extérieure (17) de l'évidement (15) et une partie centrale (18) de l'évidement (15) étant disposée entre la première partie extérieure (16) de l'évidement (15) et la deuxième partie extérieure (17) de l'évidement (15), **caractérisé en ce que** le support de tube coudé (1) présente une languette de fermeture (5) qui est pivotante autour d'un axe de pivotement par rapport au corps de base (4), et **en ce que** la partie centrale (18) de l'évidement (15), dans une position de pivotement fermée de la languette de fermeture (5), est recouverte au moins en partie par la languette de fermeture (5).

2. Support de tube coudé (1) selon la revendication 1, **caractérisé en ce que** l'axe de pivotement (9), autour duquel la languette de fermeture (5) est pivotante, est défini par rapport à un bord extérieur (7) du corps de base (4).

3. Support de tube coudé (1) selon l'une quelconque des revendications 1 et 2, **caractérisé en ce que** la languette de fermeture (5) est reliée au corps de base (4) par l'intermédiaire d'une section de liaison élastique (28).

4. Support de tube coudé (1) selon l'une quelconque des revendications 1 à 3, **caractérisé en ce que** le corps de base (4) et la languette de fermeture (5) sont formés sur une pièce moulée d'un seul morceau.

5. Support de tube coudé (1) selon l'une quelconque des revendications 1 à 4, **caractérisé en ce que** le corps de base plat (4) présente au moins une nervure de fixation (23, 24) qui est ménagée sur la première partie extérieure (16) de l'évidement (15), et/ou **en ce que** le corps de base plat (4) présente au moins une nervure de fixation (25, 26) qui est ménagée sur la deuxième partie extérieure (17) de l'évidement (15).

6. Support de tube coudé (1) selon la revendication 5, **caractérisé en ce qu'**une hauteur (27) de la nervure de fixation (23, 24) sur la première partie extérieure (16) de l'évidement (15), respectivement une hauteur (27) de la nervure de fixation (25, 26) sur la deuxième partie extérieure (17) de l'évidement (15) est plus petite qu'une hauteur (6) du corps de base plat (4).

7. Support de tube coudé (1) selon l'une quelconque des revendications 1 à 6, **caractérisé en ce qu'**au moins un tourillon de fixation (29, 30) et un trou de passage(33, 34) sont réalisés sur le corps de base (4) et sur la languette de fermeture (5), lesquels correspondent l'un à l'autre, et **en ce que** dans la position de pivotement fermée de la languette de fermeture (5), le tourillon de fixation (29, 30) dépasse au moins en partie à travers le trou de passage (33, 34).

8. Support de tube coudé (1) selon la revendication 7, **caractérisé en ce que** le tourillon de fixation (29, 30) présente une tête de fixation (31, 32) et **en ce que** la tête de fixation (31, 32), en position de pivotement fermée de la languette de fermeture (5), a prise à travers le trou de passage (33, 34).

9. Support de tube coudé (1) selon l'une quelconque des revendications 1 à 8, **caractérisé en ce qu'**au moins un évidement de fixation (35) est réalisé sur la languette de fermeture (5), lequel sert à la fixation fixe.

10. Agencement (40) muni d'un support de tube coudé (1) selon l'une quelconque des revendications 1 à 9 et muni d'un tuyau, une première section (61) du tuyau (2) étant guidée à travers la première partie extérieure (16) de l'évidement (15), une deuxième section (62) du tuyau (2) étant guidée à travers la deuxième partie extérieure (17) de l'évidement (15) et une section coudée (63) du tuyau (2) étant réalisée entre la première section (61) du tuyau (2) et la deuxième section (62) du tuyau (2).

11. Agencement (40) selon la revendication 10, **caractérisé en ce que** la première section (61) et la deuxième section (62) sont orientées au moins approximativement parallèlement l'une à l'autre.

12. Appareil ménager (3) à circulation d'eau, notamment appareil de traitement de linge (3), destiné à laver du linge, comprenant un agencement (40) selon l'une quelconque des revendications 10 et 11.
